# EUROPÄISCHE PATENTSCHRIFT

(11) **EP 0 963 078 B1**
(45) Veröffentlichungstag und Bekanntmachung des Hinweises auf die Patenterteilung: **18.08.2004**
(21) Anmeldenummer: 99110841.6
(22) Anmeldetag: 05.06.1999
(51) Int. Cl.: H04L 12/403, H04L 12/407, H04L 12/417, H04Q 9/16

(54) **Verfahren zur Halbduplex-Übertragung eines Summenrahmen**
Method for half-duplex transmission of an added sum-frame
Procédé pour la transmission semi-duplex d'un trame de somme

(30) Priorität: 06.06.1998 DE 19825357
(43) Veröffentlichungstag der Anmeldung: 08.12.1999
(73) Patentinhaber: Phoenix Contact GmbH & Co. KG, 32825 Blomberg (DE)
(72) Erfinder: Behr, Thorsten, 32805 Horn-Bad Meinberg (DE); Wenzel, Matthias, 32756 Detmold (DE)
(74) Vertreter: Elbertzhagen, Otto, Dipl.-Ing.

(56) Entgegenhaltungen:
- EP-A- 0 348 809
- WO-A-96/19885
- DE-A- 4 224 792
- DE-A- 4 433 116
- US-A- 5 434 861

## Beschreibung

Die Erfindung betrifft ein Verfahren zum Datenaustausch zwischen Master- und Slave-Teilnehmern über ein Bussystem, wobei das Bussystem an Knoten verzweigt und die Teilnehmer nach dem E-/A-orientierten Zugriffsverfahren auf ein Datentelegramm zugreifen. Ein derartiges system is beispielsweise aus US 5 434 861 bekannt.

Serielle Bussysteme werden im Allgemeinen nach ihren Zugriffsverfahren unterschieden und in die Klasse der nachrichtenorientierten und in die Klasse der E-/A-orientierten Zugriffsverfahren unterteilt.

Beim nachrichtenorientierten Zugriffsverfahren werden von einem Teilnehmer ein oder mehrere andere Teilnehmer angesprochen. Die Auswahl des angesprochenen Teilnehmers erfolgt über eine Zieladresse, die vom sendenden Teilnehmer generiert und vom empfangenden Teilnehmer ausgewertet wird.

Liegt eine übereinstimmende Adressierung vor, so werden die Nachrichtendaten vom Teilnehmer ausgewertet. Die Kommunikation erfolgt überwiegend über ein halbduplexes Verbindungssystem mit beliebiger Topologie. Mögliche Topologien sind unter anderem Sterne, Ringe, Linien und Bäume.

Eine weitere Unterteilung der nachrichtenorientierten Zugriffsverfahren erfolgt durch die Unterscheidung von kontrollierten und unkontrollierten Buszugriffen.

Bei kontrollierten Buszugriffen erfolgt die Synchronisation zwischen den Teilnehmern entweder zentral durch einen Master oder durch Token-Passing dezentral.

In Bussystemen mit unkontrolliertem Zugriff auf das Übertragungsmedium kommt es zwangsweise zu Kollisionen der Nachrichtendaten eines jeden Teilnehmers. Folglich müssen die Teilnehmer kollisionserkennende Mechanismen aufweisen, um den Übertragungsvorgang ggf. erneut zu starten.

Bekannte nachrichtenorientierte Bussysteme sind der Profibus, der DIN-Meßbus, CAN und das Ethernet, die auf das ISO-OST-Schichtenmodell abgebildet werden können. Die Vorteile des nachrichtenorientierten Bussystems liegen in der schnellen Übertragung der Daten und dem geringen Bedarf an Kanalkapazität. Prinzipiell ist ein Übertragungskanal ausreichend. Nachteilig ist jedoch einerseits die Richtungssteuerung der Nachrichtendaten und andererseits der Overhead an Adressierungsdaten im Vergleich zu Nachrichtendaten.

Bei E-/A-orientierten Zugriffsverfahren - auch Summenrahmentelegramm genannt - wird ein gemeinsames Telegramm durch alle Teilnehmer geschoben. Systembedingt ergibt sich eine logische und physikalische Ringstruktur. Die Teilnehmer entnehmen die Nachricht aus dem Telegramm bzw. schreiben die Antwort in das Telegramm ohne Adressierung, entsprechend ihrer logischen/physikalischen Position im Ring, zurück.

Aufgabe der vorliegenden Erfindung ist es, ein Verfahren zu schaffen, das einerseits die Vorteile des Summenrahmens (quasi-gleichzeitige Übertragung, Effizienz des Rahmens) und des nachrichtenorientierten Übertragungsverfahrens (nur ein Übertragungskanal zur Halbduplex-Übertragung) kombiniert.

Gelöst wird diese Aufgabe durch ein Verfahren, bei dem in einer ersten Sendephase der Master-Teilnehmer das Datentelegramm in Zweigtelegramme zerlegt. Die Zweigtelegramme werden daraufhin nacheinander an die durch die Schaltungszustände der Knoten bestimmten Slave-Teilnehmer eines Zweiges gesandt. Dabei umfaßt das Zweigtelegramm zusätzliche Knotendaten, durch die der Schaltungszustand der Knoten bestimmt wird. Hierdurch ist es möglich, den Zweig mit seinen entsprechenden Slave-Teilnehmern zu bestimmen, an den das nachfolgende Zweigtelegramm gesendet werden soll.

In komplexen Netzstrukturen bedarf es der Synchronisation des Datenflusses, damit es nicht zu Kollisionen und Datenverlusten kommt. Hierzu schließen die Knoten diejenigen Slave-Teilnehmer durch die Übertragung von Synchronisationsdaten vom Datenaustausch aus, für die das folgende Zweigtelegramm nicht bestimmt ist. Die Slave-Teilnehmer befinden sich hierbei vorzugsweise in einem Zweig.

Nach dem Abschluß der Sendephase werden in einer zweiten Empfangsphase von den nicht ausgeschlossenen Slave-Teilnehmern in chronologisch umgekehrter Reihenfolge Antwort-Zweigtelegramme an den Master-Teilnehmer zurückgesandt, der diese wiederum zusammensetzt. Hierbei agieren die Slave-Teilnehmer aufgrund der Schaltung der Knoten zwangsweise in umgekehrter Reihenfolge. Nach Beendigung des Sendens der Slave-Teilnehmer eines Zweiges schalten die Knoten sukzessive die Zweige frei, deren Slave-Teilnehmer durch die Synchronisation bisher ausgeschlossen waren. Das Freischalten erfolgt vorzugsweise aufgrund von Knotendaten, die durch das Anwort-Zweigtelegramm gesendet wurden.

Weitere vorteilhafte Ausführungsformen sind in den Unteransprüchen beschrieben. Es folgt eine detaillierte Beschreibung anhand der Zeichnungen. Es zeigt:
- Fig. 1: ein komplexes Bussystem mit einem Master-Teilnehmer und mehreren Slave-Teilnehmern, die über Knoten miteinander verbunden sind;
- Fig. 1a: ein Datentelegramm, das durch den Master-Teilnehmer entsprechend der Struktur des Bussystems in Figur 1 in Zweigtelegramme zerlegt wurde;
- Fig. 2: zeigt einen bidirektionalen Teilnehmer mit zwei Schieberegistern für jede Richtung, die durch einen Leitungscode bzw. durch Protokolldaten durch einen Schalter angesteuert werden;
- Fig. 3: zeigt ein Beispiel für die Synchronisation durch einen Leitungscode mit Synchronisations-, Sende- und Empfangsphase.

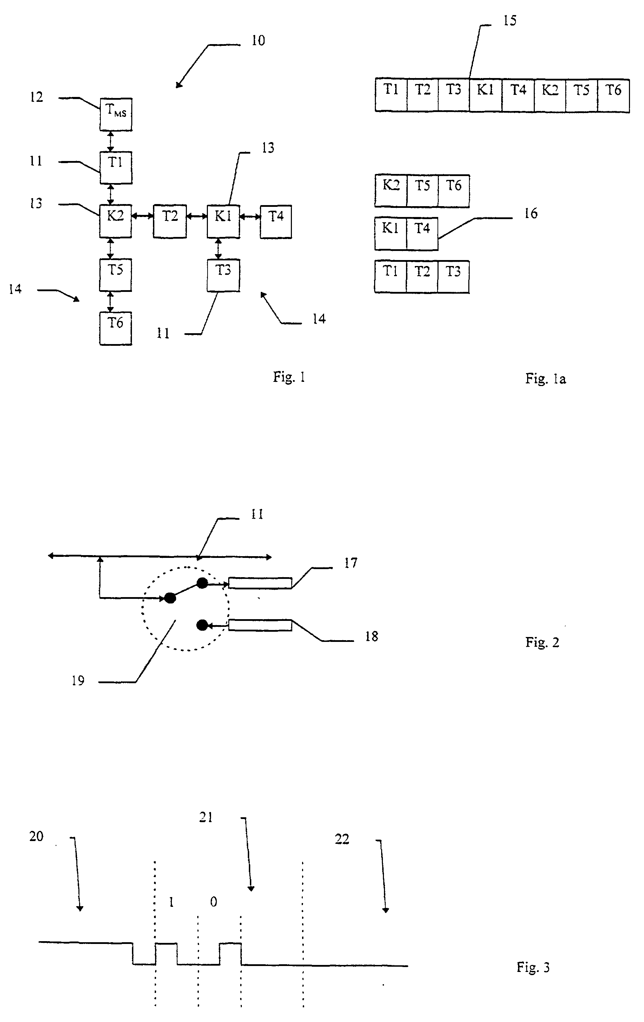

Figur 1 zeigt ein Bussystem 10 bestehend aus einer Vielzahl von Teilnehmern 11 und 12 sowie Knoten 13. Die Teilnehmer 11 und 12 sind Einheiten zur Datenein- und -ausgabe mit zwei Leitungsverbindungen. Der Knoten 13 ist jeweils eine Einheit mit mehr als zwei Leitungsverbindungen, der ein Schaltmittel für alle Leitungsverbindungen aufweist. Das Bussystem 10 verzweigt an den Knoten 13, wodurch im vorliegenden Fall eine baumförmige Struktur entsteht. Aus den Verzweigungen resultieren eine Reihe von Zweigen 14. So bilden in Figur 1 z.B. die Teilnehmer T5 und T6 einen Zweig.

Neben der einfachen Verzweigung an den Knoten 13 ist auch eine mehrfache Verzweigung denkbar. In einer weiteren Ausführungsform können die Knoten 13 ebenfalls die Funktionalität von Teilnehmern 11 und/oder 12 aufweisen.

Die Teilnehmer sind unterteilt in einen Master-Teilnehmer 12 und mehrere Slave-Teilnehmer 11. Der Master-Teilnehmer 12 ist vorzugsweise an der Wurzel eines baumförmigen Bussystems 10 angeordnet. Weitere zentrale Anordnungspositionen sind ebenfalls denkbar.

Der Master-Teilnehmer 12 zerlegt ein Datentelegramm 15, wie es in Figur 1a dargestellt ist, in eine Reihe von Zweigtelegrammen 16, die den Zweigen 14 im Bussystem 10 entsprechen. Die Zweigtelegramme 16 werden vom Master-Teilnehmer 12 nacheinander in das Bussystem 10 übertragen.

Bezogen auf das vorliegende Beispiel, wird in einer ersten Sendephase 21 (Fig. 3) als erstes das Zweigtelegramm für die Slave-Teilnehmer T5 und T6 in das Bussystem 10 gespeist. Dabei wird davon ausgegangen, daß der Knoten 13 mit dem Index K2 in seinem Ausgangszustand den graden Weg schaltet. In Abweichung zu bekannten Datentelegrammen weist das erfindungsgemäße Datentelegramm 16 zusätzliche Knotendaten auf, durch die die Schaltung der Knoten 13 gesteuert wird. Nach der Übertragung wird der Knoten K2 durch die entsprechenden Knotendaten im ersten Zweigtelegramm 16 umgeschaltet, womit die Übertragung von Synchronisationsdaten an die Slave-Teilnehmer T5 und T6 verbunden ist.

Die Synchronisationsdaten sind entweder ein logischer Leitungscode wie NULL und EINS, oder Protokolldaten. Figur 3 zeigt ein Beispiel für einen Leitungscode. Hierbei steht logisch 0 > Zeitraum 23 für die Empfangsphase 22, logisch 1 für die Synchronisationphase 20 und der Wechsel von 0 auf 1 (Daten 0) bzw. 1 auf 0 (Daten 1) bzw. 0 logisch 0 < Zeitraum 23 (Pause) für die Sendephase 21.

Zurückkommend auf das vorliegende Beispiel wird nach dem Übertragen des ersten Zweigtelegramms als nächstes das Zweigtelegramm K1, T4 in das System übertragen. Nach dem Empfang durch T4 wird der Knoten K1 umgeschaltet, um das letzte Zweigtelegramm T3, T2, T1 zu senden.

Nach Abschluß der Sendephase 21 tritt das Bussystem 10 in die Empfangsphase 22 ein. Hierbei senden die Slave-Teilnehmer 11 in chronologisch umgekehrter Reihenfolge Antwort-Zweigtelegramme. Für das vorliegende Beispiel bedeutet dies, daß zuerst die Slave-Teilnehmer T1, T2, T3 senden, danach T4 und als letztes die Slave-Teilnehmer T5, T6. Der Master-Teilnehmer 12 setzt diese Antworten wieder zu einem vollständigen Datentelegramm 15 zusammen. Damit die durch die Synchronisationsdaten ausgeschlossenen Slave-Teilnehmer 11 wieder am Datenaustausch teilnehmen können, beinhalten die Antwort-Zweigtelegramm Knotendaten, die als Leitungscode oder Protokolldaten ausgeführt sind und welche die blockierten Teilnehmer 11, 12 der einzelnen Zweige 14 wieder freischalten. Hierdurch befinden sich die Knoten 13 immer in einem definierten und deterministischen Schaltungszustand.

Die Knoten 13 und Teilnehmer 11 und 12 sind als bidirektionales Schieberegister ausgebildet, wodurch eine Halbduplex-Übertragung möglich wird. D.h. die Übertragung einer Information zum Eingang eines Teilnehmers 11, 12 führt automatisch zu einer Informationsübertragung vom Ausgang des Teilnehmers 11, 12 weg.

In Figur 2 ist der mögliche Aufbau eines Teilnehmers 11 und 12 bzw. eines Knotens 13, der die Funktion eines Teilnehmers 11, 12 vereint, dargestellt. Diese bestehen aus zwei Registern 17 und 18 für die jeweilige Datenrichtung, die durch einen Schalter 19 in Abhängigkeit von den Synchronisationsdaten geschaltet werden.

### Bezugszeichen

- 10: Bussystem
- 11: Slave-Teilnehmer
- 12: Master-Teilnehmer
- 13: Knoten
- 14: Zweig
- 15: Datentelegramm
- 16: Zweigtelegramm
- 17: Register
- 18: Register
- 19: Schalter
- 20: Synchronisationsphase
- 21: Sendephase
- 22: Empfangsphase
- 23: Zeitraum

## Patentansprüche

1. Verfahren zum Datenaustausch zwischen Master- und Slave-Teilnehmern (11, 12) über ein Bussystem (10), wobei das Bussystem (10) an Knoten (13) verzweigt und die Teilnehmer (11, 12) nach dem E-/A-orientierten Zugriffsverfahren auf ein Datentelegramm (15) zugreifen,
- bei dem in einer ersten Sendephase (21) der Master-Teilnehmer (12) das Datentelegramm (15) in Zweigtelegramme (16) zerlegt, um die Zweigtelegramme den durch den Schaltungszustand der Knoten (13) bestimmten Slave-Teilnehmer in den entsprechenden Zweigen (14) nacheinander zuzusenden, dabei weisen die Zweigtelegramme (16) Knotendaten auf, durch die der Schaltungszustand der Knoten (13) bestimmt wird,
wobei die Knoten (13) diejenigen Slave-Teilnehmer (11) durch die Übertragung von Synchronisationsdaten vom Datenaustausch ausschließen, für die das Zweigtelegramm (16) nicht bestimmt ist, und
- bei dem in einer zweiten Empfangsphase (22) die nicht ausgeschlossenen Slave-Teilnehmer (11) in umgekehrter Reihenfolge Zweigtelegramme (16) an den Master-Teilnehmer (12) zurücksenden, der diese wieder zusammensetzt,
wobei die Knoten (13) nach Beendigung der Lesephase der Slave-Teilnehmer (11) eines Zweiges (14) sukzessive die Zweige (14) mit ausgeschlossenen Slave-Teilnehmern (11) durch die erneute Übertragung von Synchronisationsdaten frei schalten, deren Slave-Teilnehmer (11) noch kein Zweigtelegramm (16) gesendet haben.

2. Verfahren nach Anspruch 1,
**dadurch gekennzeichnet,**
**daß** die Knoten (13) so geschaltet sind, daß das Zweigtelegramm (16) nur einen eindeutigen Pfad durch das Bussystem (10) nehmen kann.

3. Verfahren nach den Ansprüchen 1 und 2,
**dadurch gekennzeichnet,**
**daß** die Sende- und Empfangsphase (21, 22) vom Master-Teilnehmer (12) initiiert wird.

4. Verfahren nach den Ansprüchen 1 bis 3,
**dadurch gekennzeichnet,**
**daß** die Synchronisationsdaten logische Leitungscodes wie NULL und EINS sind.

5. Verfahren nach den Ansprüchen 1 bis 3,
**dadurch gekennzeichnet,**
**daß** die Synchronisationsdaten Protokolldaten sind.

6. Verfahren nach den Ansprüchen 1 bis 5,
**dadurch gekennzeichnet,**
**daß** die Halbduplex-Übertragung zwischen den Teilnehmern (11, 12) über einen Übertragungskanal erfolgt.

7. Verfahren nach den Ansprüchen 1 bis 6,
**dadurch gekennzeichnet,**
**daß** die Knoten (13) und Teilnehmer (11, 12) als bidirektionale Schieberegister ausgebildet sind, durch die die Daten übertragen werden.

8. Verfahren nach den Ansprüchen 1 bis 7,
**dadurch gekennzeichnet,**
**daß** die Topologie des Bussystems (10) baumförmig ist.

9. Verfahren nach den Ansprüchen 1 bis 8,
**dadurch gekennzeichnet,**
**daß** ein Knoten (13) die Funktionalität eines beliebigen Teilnehmers (11, 12) aufweist.

10. Verfahren nach den Ansprüchen 1 bis 9,
**dadurch gekennzeichnet,**
**daß** ein Teilnehmer (11, 12) mindestens zwei Register (17, 18) aufweist, die jeweils Daten für eine unterschiedliche Richtung aufnehmen, wobei die Register (17, 18) durch einen Schalter (19) in Abhängigkeit von Synchronisationsdaten geschaltet werden.

## Claims

1. Method for exchanging data between master and slave subscribers (11, 12) via a bus system (10), wherein the bus system (10) branches at nodes (13) and the subscribers (11, 12) access a data message (15) using the input/output-oriented access method,
wherein the data message (15) is broken down into branch messages (16) in a first transmission phase (21) of the master subscribers (12) in order to send the branch messages one after the other to the slave subscribers, determined by the circuit state of the nodes (13), in the corresponding branches (14) and in the process the branch messages (16) comprise node data via which the circuit state of the nodes (13) is determined,
wherein the nodes (13) exclude from the exchange of data the slave subscribers (11) for which the branch message (16) is not intended via the transmission of synchronisation data, and
wherein, in a second receiving phase (22), the non-excluded slave subscribers (11) return branch messages (16) in the reverse sequence to the master subscriber (12) which combines these again,
wherein after termination of the reading phase of the slave subscribers (11) of a branch (14) the nodes (13) successively free the branches (14) with excluded slave subscribers (11) via the repeated transmission of synchronisation data, of which branches the slave subscribers (11) have still not transmitted a branch message (16).

2. Method according to claim 1,
**characterised in that**
the nodes (13) are switched such that the branch message (16) can only take one clear path through the bus system (10).

3. Method according to claims 1 and 2,
**characterised in that**
the transmitting and receiving phase (21, 22) is initiated by the master subscriber (12).

4. Method according to claims 1 to 3,
**characterised in that**
the synchronisation data are logic line codes such as ZERO and ONE.

5. Method according to claims 1 to 3,
**characterised in that**
the synchronisation data is protocol data.

6. Method according to claims 1 to 5,
**characterised in that**
the half-duplex transmission takes place between the subscribers (11, 12) via a transmission channel.

7. Method according to claims 1 to 6,
**characterised in that**
the nodes (13) and subscribers (11, 12) are configured as bi-directional shift registers via which the data is transmitted.

8. Method according to claims 1 to 7,
**characterised in that**
the topology of the bus system (10) is tree-like.

9. Method according to claims 1 to 8,
**characterised in that**
a node (13) has the functionality of an arbitrary subscriber (11, 12).

10. Method according to claims 1 to 9,
**characterised in that**
a subscriber (11, 12) has at least two registers (17, 18) which each receive data for a different direction, the register (17, 18) being switched by a switch (19) as a function of synchronisation data.

## Revendications

1. Procédé pour l'échange de données entre des participants maîtres et des participants esclaves (11, 12) par un système de bus (10), ledit système de bus (10) étant ramifié à des noeuds (13) et les participants (11, 12) ayant accès à un télégramme de données (15) orienté entrée / sortie,
- dans le cadre duquel, au cours d'une première phase d'émission (21), le participant maître (12) fractionne le télégramme de données (15) en télégrammes de branches (16) pour envoyer successivement lesdits télégrammes de branches à des participants esclaves définis, dans les branches (14) correspondantes, par l'état de commutation des noeuds (13), ce faisant lesdits télégrammes de branches (16) présentent des données nodales, à l'aide desquelles l'état de commutation des noeuds (13) est défini,
les noeuds (13) excluant de l'échange de données, par la transmission de données de synchronisation, les participants esclaves (13) auxquels le télégramme de branche (16) n'est pas destiné, et
- dans le cadre duquel, au cours d'une deuxième phase de réception (22), les participants esclaves (11), non exclus, retournent, en ordre inverse, des télégrammes de branches (16) au participant maître (12) qui les assemble de nouveau,
les noeuds (13), après achèvement de la phase de lecture des participants esclaves (11) d'une branche (14), libérant, successivement, par une nouvelle transmission de données de synchronisation, les branches (14) comprenant des participants esclaves (11) exclus, n'ayant pas encore émis de télégrammes de branches (16).

2. Procédé selon la revendication 1,
**caractérisé en ce que**
les noeuds (13) sont connectés de sorte que le télégramme de branche (16) ne puisse prendre qu'un chemin univoque, par le système de bus (10).

3. Procédé selon les revendications 1 et 2,
**caractérisé en ce que**
la phase d'émission et de réception (21, 22) est initialisée par le participant maître (12).

4. Procédé selon les revendications 1 à 3,
**caractérisé en ce que**
les données de synchronisation sont des codes en ligne logiques comme ZERO et UN.

5. Procédé selon les revendications 1 à 3,
**caractérisé en ce que**
les données de synchronisation sont des données de protocole.

6. Procédé selon les revendications 1 à 5,
**caractérisé en ce que**
la transmission semi-duplex entre les participants est effectuée par un canal de transmission.

7. Procédé selon les revendications 1 à 6,
**caractérisé en ce que**
les noeuds (13) et les participants /11, 12) sont conçus en tant que registres de décalage bidirectionnels, par lesquels les données sont transmises.

8. Procédé selon les revendications 1 à 7,
**caractérisé en ce que**
la topologie du système de bus (10) est arborescente.

9. Procédé selon les revendications 1 à 8,
**caractérisé en ce**
**qu'**un noeud (13) présente la fonctionnalité d'un quelconque participant (11, 12).

10. Procédé selon les revendications 1 à 9,
**caractérisé en ce**
**qu'**un participant (11, 12) présente au moins deux registres (17, 18) qui reçoivent chacun des données pour une direction différente, les registres (17, 18) étant connectés à l'aide d'un commutateur (19), en dépendance de données de synchronisation.
